**Europäisches Patentamt**

**European Patent Office**

**Office européen des brevets**

(19)

(11) Veröffentlichungsnummer:

**0 065 280**
A1

(12)

# EUROPÄISCHE PATENTANMELDUNG

(21) Anmeldenummer: **82104173.8**

(22) Anmeldetag: **13.05.82**

(51) Int. Cl.³: **B 62 M 7/14**

(30) Priorität: **19.05.81 DE 3119842**

(43) Veröffentlichungstag der Anmeldung: **24.11.82**
**Patentblatt 82/47**

(84) Benannte Vertragsstaaten: **DE FR GB IT NL**

(71) Anmelder: **Spiegel, Bernt, Prof. Dr., Hauptstrasse 118, D-6803 Edingen (DE)**

(72) Erfinder: **Spiegel, Bernt, Prof. Dr., Hauptstrasse 118, D-6803 Edingen (DE)**

(74) Vertreter: **Zapfe, Hans, Dipl.-Ing., Seestrasse 2, D-6054 Rodgau-3 (DE)**

(54) **Strassenfahrzeug mit Elektroantrieb auf der Grundlage eines Zweirades sowie Antriebsaggregat für die Umrüstung eines Zweirades in ein Strassenfahrzeug mit Elektroantrieb.**

(57) Die Erfindung betrifft ein Strassenfahrzeug mit Elektroantrieb auf der Grundlage eines Zweirades mit einem Rahmen, einer elektrischen Energiequelle und einem elektrischen, auf mindestens ein Rad einwirkenden Antriebsmotor. Zur Lösung der Aufgabe, eine ausreichende Reichweite, eine zufriedenstellende Handlichkeit, eine grosse Transportkapazität bei günstigem Preis zu erzielen, wird erfindungsgemäss vorgeschlagen, dass die Energiequelle (20) und der Antriebsmotor (21) an einem zusätzlichen Fahrgestell (19) angeordnet sind. Dieses Fahrgestell ist auf einer Seite mit dem Rahmen (2) des Zweirades (1) über ein Pendelgelenk (13) verbunden, dessen Gelenkachse (14) parallel zur Längsachse des Rahmens verläuft. Das Fahrgestell (19) ist auf der anderen, dem Rahmen (2) abgekehrten Seite mit einem weiteren Rad (25) versehen, auf das der Antriebsmotor (21) einwirkt.

Herr
Professor Dr. Bernt Spiegel
Hauptstraße 118

6803 Edingen

---------------------------------------------------------------------

"Straßenfahrzeug mit Elektroantrieb auf der Grundlage eines Zweirades sowie Antriebsaggregat für
die Umrüstung eines Zweirades in ein Straßenfahrzeug mit Elektroantrieb"

---------------------------------------------------------------------

Die Erfindung bezieht sich auf ein Straßenfahrzeug mit Elektroantrieb auf der Grundlage eines Zweirades mit einem Rahmen,
einer elektrischen Energiequelle und einem elektrischen, auf
mindestens ein Rad einwirkenden Antriebsmotor.

Durch den laufenden Anstieg der Kraftstoffpreise wird die
Forderung nach Kraftfahrzeugen mit geringerem Kraftstoffverbrauch
zunehmend lauter. Als Idealfall wäre ein Ersatz von Erdölprodukten als Kraftstoffe durch elektrische Energie in Verbindung mit Elektromotoren anzustreben, zumal diese Antriebsart am Ort der Energieumsetzung in Bewegung keinerlei Umweltbelastung mit sich bringt.

Leider haben die heute zur Verfügung stehenden Speicher für elektrische Energie wie Batterien und Akumulatoren noch ein verhältnismäßig ungünstiges Verhältnis von Gewicht zu Ladekapazität. Dies führt bei hohem Fahrzeuggewicht zu einem entsprechend kleinen Aktionsradius. Es wird vermutlich noch einige Zeit dauern, bis das Gewicht der Energiespeicher merklich gesenkt und der Aktionsradius entsprechend erhöht werden kann.

Die Probleme sind jedoch im Bereich kleinerer Aktionsradien nicht unlösbar. So wurde beispielsweise festgestellt, daß die Hälfte aller Autofahrten Kurzfahrten im Nahbereich unter sieben Kilometer sind. Hier ist beispielsweise an kurze Wege zum Arbeitsplatz, Einkaufsfahrten der Hausfrau, Transporte zu Ausbildungsplätzen etc. zu denken. Es ist bereits eine deutliche Tendenz erkennbar, diese Kurzfahrten mit dem Fahrrad durchzuführen. Hier sind jedoch Widerstände bei weniger sportlichen Menschen, älteren Personen sowie in bergigen Landschaften erkennbar.

Wenn es schon nur mühsam gelingt, das Gewicht der elektrischen Energiespeicher zu senken, so ist jedenfalls der Einsatz extrem leichter Fahrzeuge mit Elektroantrieb keine Utopie mehr. Das Fahrrad als Zweiradfahrzeug nimmt hierbei wegen seiner geringen benötigten Antriebsleistung eine bevorzugte Rolle ein. Es hat daher nicht an Versuchen gefehlt, Elektro-Mofas zu bauen oder Fahrräder in Elektrofahrzeuge zu verwandeln.

So ist es beispielsweise bekannt, einen elektrischen Fahrradmotor der amerikanischen Firma Pedalpower vor dem sogenannten Steuerrohr des Fahrradrahmens mit der Lenkstange schwenkbar zu montieren und die Antriebsleistung durch ein Reibrad auf das Vorderrad zu übertragen. Durch Betätigen eines an der Lenkstange angebrachten Hebels wird über einen Bowdenzug das Reibrad an den Reifen gedrückt und zugleich der Stromkreis geschlossen. Der ein beträchtliches Gewicht aufweisende Akkumulator ist am sogenannten Oberrohr des Rahmens aufgehängt oder auf dem Gepäckträger montiert. Durch die hohe Anbringung von Antriebsmotor und Akkumulator erhält das Elektrofahrrad einen außerordentlich hohen Schwerpunkt, der Fahreigenschaften und Handhabung beeinträchtigt. Im Falle eines Sturzes läuft der Fahrer Gefahr, zumindest mit einem Bein zwischen Akkumulator und Fahrbahn zu geraten und sich hierbei Verletzungen zuzuziehen. Mit Rücksicht auf diese Problematik ist das Gewicht und damit die Ladekapazität des Akkumulators begrenzt. Durch die unvermeidbar hohe Schwerpunktlage ist das bekannte Fahrrad unhandlich, vor allem beim Rangieren, Abstellen und Unterstellen. Bei Erschöpfung der Batterie müssen diese und der Antriebsmotor getrennt abgebaut werden, sonst ist das Fahrzeug nur mit Anstrengung fortzubewegen. Die Transportkapazität ist nicht größer als die eines Fahrrads. Bei einer entsprechend verstärkten Ausführung zur Aufnahme eines höheren Batteriegewichts würde sich ein höherer Preis, wiederum in Verbindung mit einer weiteren Verminderung der Handlichkeit ergeben. Die bekannte Lösung hat sich infolgedessen nicht durchgesetzt.

Zu dem bekannten Reibradantrieb ist noch auszuführen, daß dieser beim Betrieb weitere Probleme aufwirft. Die Fahrgeschwindigkeit kann nicht stufenlos verändert werden, ein Nachteil, der sich bei schleichendem Stadtverkehr besonders bemerkbar macht. Eine Verminderung der Fahrgeschwindigkeit ist nur durch Auskuppeln möglich. Ein Anfahren mit Motorkraft ist nicht möglich, sondern das Fahrrad muß zunächst durch Treten beschleunigt werden. Beim Ausrollen bzw. Bremsen und bei der Bergabfahrt erfolgt kein Nachladen der Batterie.

Weiterhin ist der bekannte Reibradantrieb mit merklichen Leistungsverlusten sowie mit einem Verschleiß des Reibrades und des angetriebenen Rades durch Abrieb verbunden. Bei schmutziger und nasser Fahrbahn tritt unvermeidbar ein Schlupf auf. Die bekannte Lösung wurde offenbar gewählt, um eine einfache Nachrüstung eines normalen Fahrrads durch den Käufer zu ermöglichen.

Der Erfindung liegt daher die Aufgabe zugrunde, ein Straßenfahrzeug der eingangs beschriebenen Gattung anzugeben, welches bei ausreichender Reichweite eine zufriedenstellende Handlichkeit, eine große Transportkapazität sowie einen günstigen Preis auf sich vereint. Diese Forderungen laufen sich zumindest teilweise zuwider.

Die Handlichkeit ist vorrangig vom Gewicht und von der Schwerpunktlage bestimmt und wird vor allem spürbar beim Rangieren und beim Abstellen und Unterstellen. Als Transportkapazität ist die mögliche Zuladung nach Gewicht und Volumen zu verstehen, wobei als Mindestforderung beispielsweise von einem Kasten Bier oder einem Kind auszugehen ist.

Die Lösung der gestellten Aufgabe erfolgt bei dem eingangs beschriebenen Straßenfahrzeug erfindungsgemäß dadurch, daß die Energiequelle und der Antriebsmotor an einem zusätzlichen Fahrgestell angeordnet sind, welches auf einer Seite mit dem Rahmen des Zweirades über ein Pendelgelenk verbunden ist, dessen Gelenkachse parallel zur Längsachse des Rahmens verläuft, und welches auf der anderen, dem Rahmen abgekehrten Seite mit einem weiteren Rad versehen ist, auf das der Antriebsmotor einwirkt.

Im Prinzip handelt es sich dabei um eine Art Pendelseitenwagen mit einem zusätzlichen Rad, durch dessen Anbau an ein herkömmliches Zweirad ein Dreirad geschaffen wird, welches jedoch nicht die unangenehmen Fahreigenschaften eines "Gespannes" mit starr angebrachtem Seitenwagen besitzt. Bei Versuchen zeigt es sich nämlich, daß ein starr angebrachter Seitenwagen den Fahrer bei unebenen Bodenverhältnissen dazu drängt, eine Kurve zu fahren, die der erzwungenen Schräglage des Fahrrades entspricht, unabhängig davon, ob der Fahrer nun beabsichtigt, in diese Richtung zu fahren oder nicht. Dieser Effekt wurde in der Vergangenheit auch bei Motorradfahrern beobachtet, die von einer Solo-Maschine auf ein Gespann umsteigen. Der beobachtete Effekt ist dabei um so stärker, je leichter das Gespann ist.

Durch das Merkmal, das zusätzliche Fahrgestell über ein Pendelgelenk mit dem Rahmen des Zweirades zu verbinden, wird dieser Effekt ausgeschaltet, und das Fahrrad hat annähernd das gleiche Fahrverhalten wie ohne angehängtes Fahrgestell.

- 6 -

Durch das Merkmal, das auf der dem Rahmen des Zweirads abgekehrten Seite des Fahrgestells angeordnete Rad mittels des Antriebsmotors anzutreiben, wird erreicht, daß auf jegliche Verbindung des Antriebsmotors mit dem ursprünglichen Zweirad sowie auf entsprechende Eingriffe in die Konstruktion dieses Zweirades verzichtet werden kann. Der Antriebsmotor ist vielmehr dem Rad des Fahrgestells und damit auch der auf dem Fahrgestell angeordneten Energiequelle unmittelbar zugeordnet, so daß die Leistungsübertragung vom Antriebsmotor auf das weitere Rad durch ein formschlüssiges Antriebsmittel erfolgen kann, wie durch eine Kette oder einen Zahnriemen. Damit sind die unerwünschten Begleiteigenschaften eines Reibradantriebs wie erhöhter Energieverbrauch, Schlupf und Abrieb ausgeschaltet.

Es hat sich dabei überraschend gezeigt, daß der außermittige Antrieb über das seitlich vom Zweirad angeordnete Rad des Fahrgestells keinerlei störenden Einfluß auf die Fahreigenschaften des kompletten Fahrzeugs hat, und zwar weder bei einer Beschleunigung, noch bei einer Verzögerung durch Abbremsung mittels des als Generator wirkenden Motors, der in diesem Fall die Energiequelle auflädt.

Das komplette Fahrgestell kann durch eine Trennung an der Stelle des Pendelgelenks wieder vom Zweirad getrennt werden. Dies ist beispielsweise zum Zwecke eines Nachladens der Energiequelle oder zur Benutzung des Zweirades als normales Fahrrad beispielsweise an Wochenenden von Vorteil.

Auf dem Fahrgestell läßt sich jedenfalls bei nur mäßig vergrößertem Gesamtgewicht eine wesentlich größere Batteriekapazität unterbringen, so daß die Reichweite gegenüber der eingangs beschriebenen bekannten Lösung beträchtlich erhöht wird. Wie sich im Zusammenhang mit der Schilderung eines Ausführungsbeispiels noch ergibt, läßt sich der Schwerpunkt der Energiequelle sehr tief anordnen, so daß sich ein günstiges Fahrverhalten ergibt. Auch ist die Gefahr ausgeschaltet, daß Körperteile des Fahrers bei einem Sturz zwischen Fahrbahn und Energiequelle gelangen, so daß die Unfallgefahr beträchtlich vermindert wird. Hierbei ist insbesondere auch an glatte Fahrbahnen zu denken.

Trotz der möglichen hohen Ladekapazität ist eine Verstärkung des Fahrradrahmens entbehrlich, so daß jedes handelsübliche Fahrrad zum Einsatz gebracht werden kann, und zwar unabhängig von dessen Größe. Eine Anpassung an unterschiedliche Raddurchmesser kann einfach dadurch erfolgen, daß man das weitere Rad höhenverstellbar im Fahrgestell anordnet.

Aufgrund der höheren Batteriekapazität ergibt sich nicht nur eine größere Reichweite, sondern auch die Eignung in bergigem Gelände wird beträchtlich erhöht, weil auch längere und größere Steigungen bewältigt werden können. Es hat sich gezeigt, daß der Erfindungsgegenstand auch beim Rangieren, Abstellen oder Unterstellen außerordentlich handlich ist. Er ist gegebenenfalls auch bei entladener Energiequelle durch Treten mit zumutbarer Anstrengung fortzubewegen.

Durch die Zuordnung des seitlichen Fahrgestells zum Fahrrad wird nicht nur die Transportkapazität nicht verringert, sondern - im Gegenteil - sogar vergrößert, indem nämlich auf dem Fahrgestell eine zusätzliche Ladefläche für Transportgut vorgesehen werden kann.

Die Verbindung des Fahrgestells mit dem Zweirad durch ein Pendelgelenk hat den zusätzlichen Vorteil, daß bei Kurvenfahrten keinerlei Verwindungskräfte auf den leichten Fahrradrahmen übertragen werden, der für diesen Fall keine ausreichende Torsionssteifigkeit besitzt. Durch das Pendelgelenk werden eben diese Verwindungskräfte vom Fahrradrahmen ferngehalten, was wiederum die Verwendung eines üblichen Fahrrads begünstigt. Das Pendelgelenk beeinträchtigt beim Stillstand jedoch keineswegs die Standfestigkeit des kompletten Fahrzeugs, weil nämlich die Belastung des im Fahrgestell angebrachten dritten Rades dessen Querverschiebung auf der Aufstellfläche verhindert. Befindet sich das Fahrzeug jedoch in Bewegung, so folgt das Fahrgestell und damit das dritte Rad durch einen gewissen Schräglauf der Reifenlauffläche ohne weiteres einer durch eine Kurvenfahrt bedingten Schräglage des Zweirads, so daß hier kein Zwang auf den Fahrer ausgeübt wird.

Als Energiequelle werden vorzugsweise zwei handelsübliche Akkumulatoren zu je 12 Volt in Reihenschaltung verwendet. Sofern die Akkumulatoren in Fahrtrichtung nebeneinander angeordnet sind, ergibt sich eine Spurbreite von etwa 550 mm bei einer Gesamtbreite von 880 mm. Es ist jedoch ohne weiteres möglich, die beiden Akkumulatoren in Fahrtrichtung hintereinander anzuordnen, wodurch sich die Spurbreite auf 400 mm und die Gesamtbreite auf 730 mm verringern. Diese Maße lassen sich bei Anwendung nur eines einzigen Akkumulators noch weiter verringern. Dem steht gegenüber eine Gesamtbreite von etwa 540 mm bei einem handelsüblichen Fahrrad.

Die Erfindung läßt sich besonders gut in Form eines Antriebsaggregats realisieren, welches als komplettes Paket für die Umrüstung eines herkömmlichen Zweirades angeboten werden kann. Dabei sind zweckmäßig lediglich die Akkumulatoren getrennt verpackt, jedoch vorgeladen und sofort betriebsbereit.

Der Erfindungsgegenstand läßt sich besonders vorteilhaft dadurch weiter ausgestalten, daß das Pendelgelenk an einem etwa U-förmigen Bügel angeordnet ist, der zur Aufnahme des Hinterrades des Zweirades ausgebildet ist und dessen Schenkel mit Befestigungsmitteln zur Anbringung an der Hinterradgabel des Zweirades versehen sind. Dieser U-förmige Bügel wird symmetrisch zum Hinterrad angebracht, wobei die durch die beiden Schenkel gehende Hauptebene im wesentlichen waagrecht angeordnet wird. Dies kann in besonders bevorzugter Weise dadurch geschehen, daß der Bügel mit Schlitzen versehen ist, die zum Aufstecken auf die Enden der Hinterachse des Zweirades dienen, wo der Bügel durch die Radmuttern gehalten wird. Zweckmäßig befinden sich die Schlitze dabei in Laschen, die an den Bügel angeschweißt sind und nach oben ragen. Weiterhin sind die Schenkel des Bügels zweckmäßig über die Schlitze hinaus verlängert und an ihren Enden mit Einrichtungen zum Verbinden mit der unteren Hinterradgabel versehen. Dies kann beispielsweise durch sogenannte Rohrschellen geschehen, wie sie ähnlich in Verbindung mit dem Bremshebel einer Freilaufnabe verwendet werden. Auf diese Weise wird der Bügel mit dem einen Teil des Pendelgelenks zuverlässig am Fahrradrahmen befestigt und kann dort auch dann verbleiben, wenn das Zweirad als Fahrrad, d.h. ohne das Fahrgestell bzw. den Seitenwagen verwendet wird.

- 10 -

Zur Erzeugung einer leichten Lösbarkeit des Fahrgestells
besteht das Pendelgelenk besonders zweckmäßig einerseits
aus einer Gelenkhülse, die parallel zum einen Schenkel des
Bügels verläuft und unmittelbar an diesem befestigt ist,
und andererseits aus zwei hülsenförmigen Ösen, die am Fahrgestell befestigt sind, und zwischen die die Gelenkhülse
des Bügels einsetzbar ist. Es genügt alsdann bei fluchtender
Ausrichtung der Gelenkhülse und der beiden Ösen das Einschieben einer Stange, um das Fahrgestell zuverlässig mit
dem Zweirad zu verbinden.

Wie bereits weiter oben ausgeführt wurde, ist es besonders
zweckmäßig, den Antriebsmotor ständig in Verbindung mit
dem angetriebenen Rad zu halten, um beispielsweise beim
Bremsen oder einer Talfahrt den Motor zu Bremszwecken als
Generator betreiben zu können und den Generatorstrom zum Nachladen der Energiequelle zu benutzen. Hierdurch werden die
Bremsen des Fahrrads vor Überhitzung bei längerer Talfahrt
bewahrt und gleichzeitig der Verlust an Reichweite durch eine
etwa vorausgegangene Bergauffahrt zumindest teilweise wieder
ausgeglichen. Dabei ist es besonders zweckmäßig, in der
Stromversorgung des Antriebsmotors einen Leistungssteller anzuordnen, wie er beispielsweise bei Elektro-Krankenfahrstühlen
verwendet wird. Derartige Leistungssteller arbeiten nahezu
verlustlos. Es hat sich gezeigt, daß die guten Fahreigenschaften
trotz des außermittigen Antriebs auch dann nicht beeinträchtigt
werden, wenn plötzliche Lastwechsel zwischen Verzögerung und
Beschleunigung herbeigeführt werden.

Weitere vorteilhafte Ausgestaltungen des Erfindungsgegenstandes
ergeben sich aus den übrigen Unteransprüchen.

Ein Ausführungsbeispiel des Erfindungsgegenstandes wird nachfolgend anhand der Figuren 1 bis 4 näher erläutert.

Es zeigen:

Figur 1    eine Ansicht des vollständigen Straßenfahrzeugs von hinten, d.h. in Richtung auf das Hinterrad des Zweirades,

Figur 2    eine Draufsicht auf den Gegenstand nach Figur 1 im Bereich des Hinterrades von oben,

Figur 3    eine perspektivische Ansicht des Gegenstandes nach den Figuren 1 und 2, und

Figur 4    eine perspektivische Ansicht des Hinterrades des Fahrrades mit montiertem U-förmigen Bügel analog Figur 3, jedoch bei abgenommenen Fahrgestell.

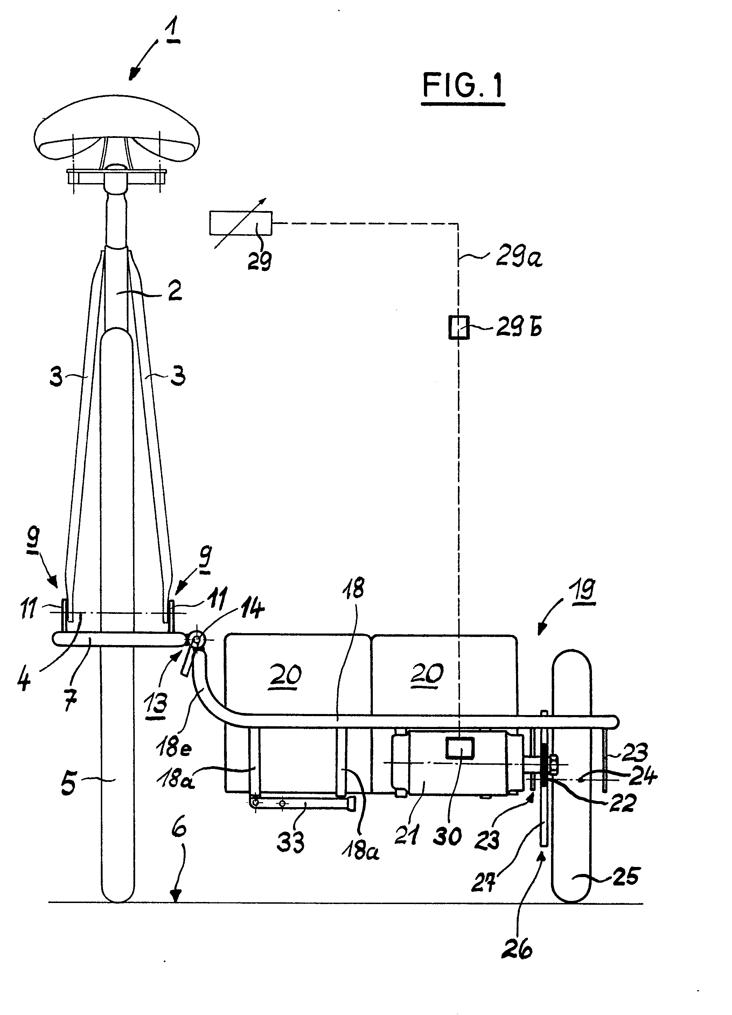

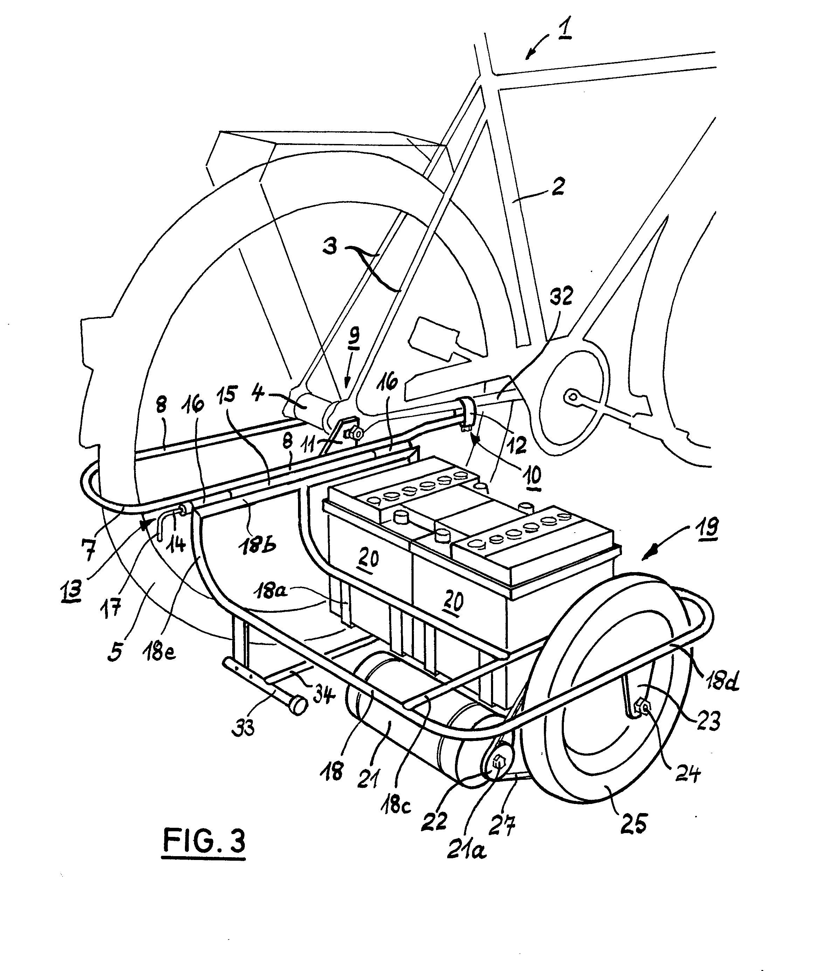

In den Figuren 1 bis 3 ist schematisch ein handelsübliches Zweirad 1 in Form eines normalen Fahrrades gezeigt, und zwar in der Draufsicht von hinten unter Weglassung des Schutzblechs. Das Zweirad besitzt einen Rahmen 2, von dem die obere Hinterradgabel 3 sichtbar ist. In den Enden dieser Gabel ist die Achse 4 eines Hinterrades 5 gelagert, welches auf einer Fahrbahn 6 aufliegt. Unter "Rahmen" wird beim Zweirad jede Einrichtung verstanden, die Vorder- und Hinterrad manövrierfähig miteinander verbindet. Es kann sich also anstelle des gezeigten Rohrrahmens um einen Schalenrahmen oder dergleichen handeln.

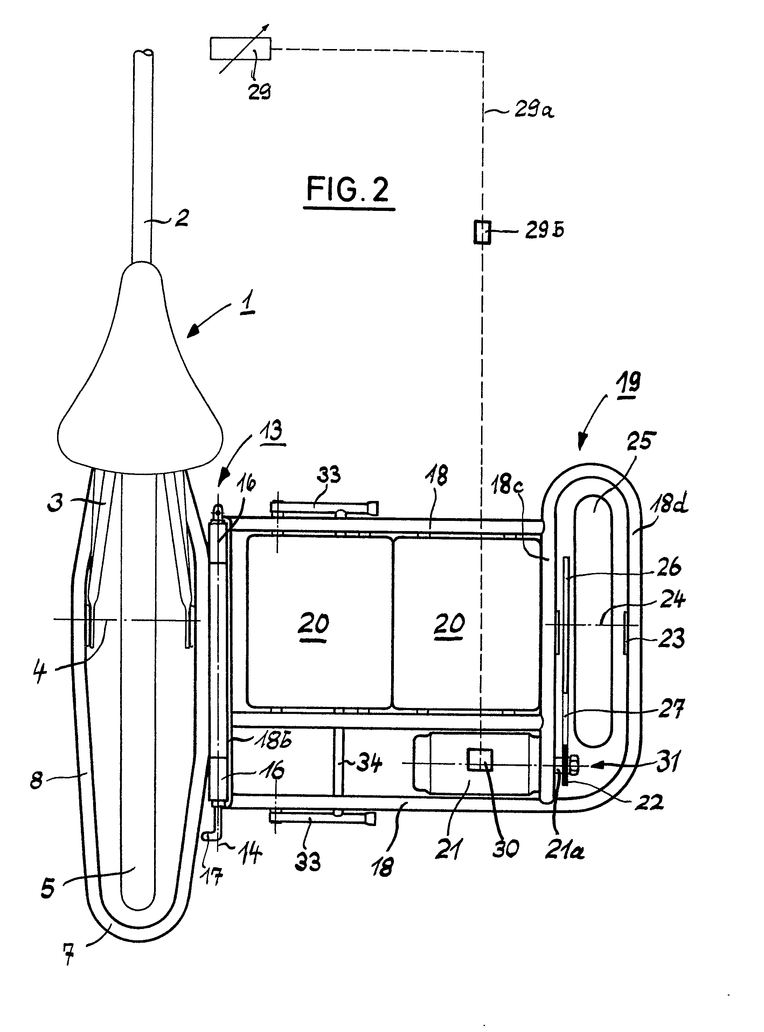

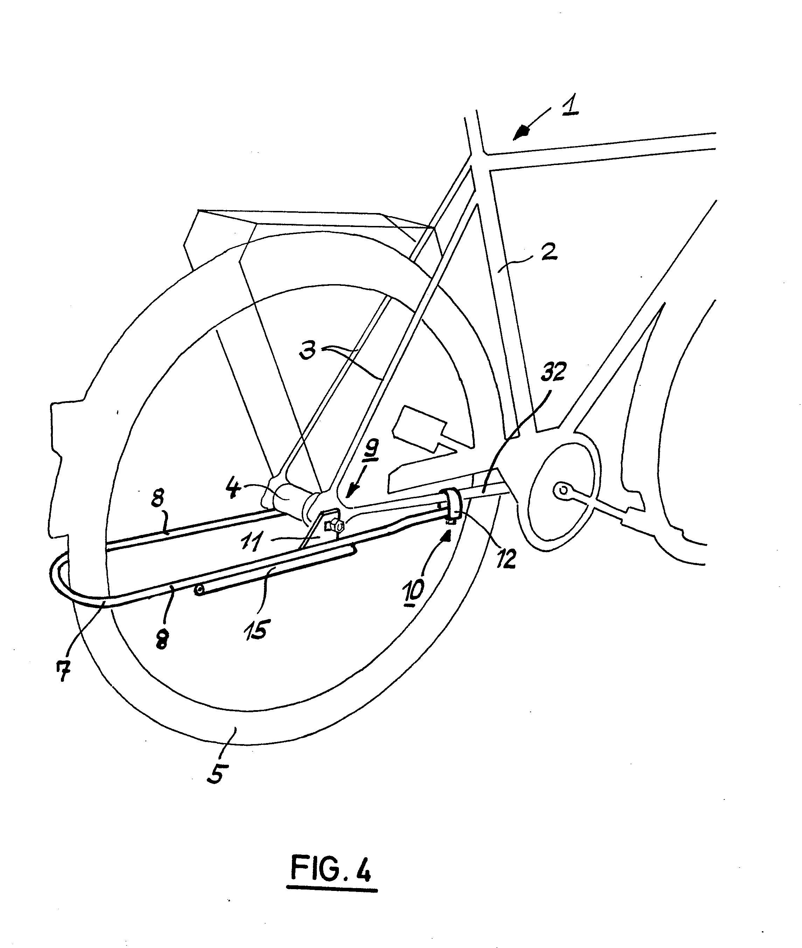

Mit dem Rahmen 2 ist über die Achse 4 und die nicht dargestellten Radmuttern ein U-förmiger Bügel 7 verbunden, dessen
nicht näher bezeichnetes Joch um das Hinterrad verläuft
und dessen Schenkel 8 (Figur 2) im wesentlichen parallel zur
Längsachse des Rahmens 2 in Fahrtrichtung und damit senkrecht zur Zeichenebene verlaufen. An dem Bügel 7 befinden
sich Befestigungsmittel 9 und 10 in Form hochgestellter
Laschen 11 bzw. Rohrschellen 12. In den Laschen 11 sind
nicht näher bezeichnete Schlitze zum Aufstecken auf die
Enden der Achse 4 vorhanden (Figur 4).

An dem in Figur 1 rechten Schenkel 8 des Bügels 7 ist ein
Pendelgelenk 13 befestigt, dessen Gelenkachse 14 sich in
Fahrtrichtung und damit senkrecht zur Zeichenebene erstreckt.
Das Pendelgelenk 13 besteht einerseits aus einer Gelenkhülse 15, die parallel zum rechten Schenkel 8 verläuft und
mit diesem verschweißt ist, sowie aus zwei hülsenförmigen
Ösen 16, von denen die eine in Fahrtrichtung vor und die
andere hinter der Gelenkhülse angeordnet ist. Beim Fluchten
der beiden Ösen 16 mit der Gelenkhülse 15 wird in deren
Bohrungen eine Stange 17 eingeführt, deren Achse die Gelenkachse 14 ist. Die Ösen 16 sind durch Schweissen mit dem
Rahmen 18 eines Fahrgestells 19 verbunden, auf dem eine
Energiequelle 20 in Form zweier aufladbarer Akkumulatoren
angeordnet ist. An dem Fahrgestell 19 ist weiterhin ein
Antriebsmotor 21 befestigt, der ein Ritzel 22 in Form
eines Kettenrades oder einer Zahnriemenscheibe aufweist.

Der Rahmen 18 besitzt mehrere trogförmig gebogene Streben 18a,
die als Auflage für die Energiequelle 20 dienen. Weiterhin
sind an dem Rahmen 18 zwei nach unten gerichtete Lagerböcke 23 befestigt, in denen jeweils übereinander mehrere nicht näher bezeichnete Schlitze zum Einsetzen einer Achse 24 eines weiteren Rades 25 angeordnet sind. Die paarweise in den beiden Lagerböcken angeordneten Schlitze dienen zur Anpassung des Fahrgestells 19 an unterschiedliche Durchmesser des Hinterrades 5. Auf die angegebene Weise ist das weitere Rad 25 auf der dem Rahmen 2 abgekehrten Seite des Fahrgestells angeordnet. Mit dem Rad 25 ist verdrehfest ein Antriebsrad 26 verbunden, welches entweder als Kettenrad oder als Zahnriemenscheibe ausgebildet ist und über ein Übertragungselement 27 (Kette oder Zahnriemen) mit dem Ritzel 22 verbunden ist. Auf die angegebene Weise wirkt der Antriebsmotor 21 auf das Rad 25 ein und steht mit diesem in ständiger Verbindung, ohne daß hierfür ein Reibradantrieb benötigt würde.

Aus Figur 1 ist zu entnehmen, daß der Rahmen 18 mit den Streben 18a in montiertem Zustand etwa waagrecht ausgerichtet ist. Der Rahmen 18 besitzt weiterhin Längsholme 18b, 18c und 18d, von denen der eine Längsholm 18b derjenige ist, an dem die beiden Ösen 16 befestigt sind. An den beiden weiteren Längsholmen 18c und 18d sind die bereits beschriebenen Lagerböcke 23 für die Achse 24 des Rades 25 befestigt. Auf diese Weise wird das Rad 25 zuverlässig und starr zwischen den Längsholmen 18c und 18d geführt.

Aus Figur 1 ist weiterhin zu entnehmen, daß der Rahmen 18 in einer Ebene quer zur vorgegebenen Fahrtrichtung, d.h. in der Zeichenebene, etwa L-förmig mit einem nach oben gerichteten kurzen Schenkel 18e ausgebildet ist, und daß das Pendelgelenk 13 am oberen Ende des kurzen Schenkels 18e angeordnet ist.

Unter "Rahmen" wird beim Fahrgestell jede Einrichtung verstanden, die eine ausreichende Tragfähigkeit besitzt. Es kann sich also anstelle des gezeigten Rohrrahmens um ein tiefgezogenes oder aus Kunststoff gespritztes oder gepreßtes Schalengebilde handeln.

Das Fahrgestell 19 ist mit zwei Stützen 33 ausgestattet, die zur Abstützung des Fahrgestells 19 in abgebautem Zustand dienen und durch eine Strebe 34 miteinander gekoppelt sind. Die Stützen sind in unterschiedlicher Höhe am Fahrgestell befestigbar.

Der elektrischen Ausrüstung ist eine Verstelleinrichtung 29 in Form eines Hand-Drehgriffs zugeordnet, die mit der Lenkstange des Zweirads 1 verbunden ist. Diese Verstelleinrichtung 29 steht über ein Übertragungsglied 29a mit einer trennbaren Kupplung 29b mit einem Leistungssteller 30 in Verbindung, der eine praktisch verlustfreie Leistungsregelung des Antriebsmotors 21 ermöglicht. Zwischen der Welle 21a des Antriebsmotors 21 und dem Ritzel 22 ist eine lösbare Kupplung 31 vorgesehen, durch die der Antriebsmotor 21 wahlweise abkuppelbar ist, wenn das Fahrzeug beispielsweise bei entladener Batterie durch Treten bewegt werden soll. Im Normalfall steht jedoch der Antriebsmotor mit dem angetriebenen Rad in ständiger Verbindung.

Figur 4 zeigt noch Einzelheiten des U-förmigen Bügels 7 und seiner Verbindung mit der unteren Hinterradgabel 32 des Rahmens 2. Nachdem das Fahrgestell 19 abgenommen worden ist, ist die Gelenkhülse 15 deutlich erkennbar, desgleichen ist die eine der beiden Laschen 11 gut erkennbar, mit der der Bügel auf die Enden der Hinterachse 4 aufgesteckt ist. Auch die am vorderen Ende der Schenkel 8 des Bügels 7 angeordneten, die Rahmengabel 32 umfassenden Rohrschellen 12 sind gut erkennbar. Der am Rahmen 2 verbleibende Bügel 7 stellt zusätzlich einen wirksamen Schutz des Hinrerrades 5 dar. Es ist ersichtlich, daß außer der Anbringung des Bügels 7 und der Verstelleinrichtung 29 keine weiteren Veränderungen am Zweirad 1 vorgenommen zu werden brauchen, um das herkömmliche Fahrrad in ein Elektrofahrzeug zu verwandeln. Auch ist die Rückverwandlung in ein "normales" Fahrrad durch ein Abnehmen des Fahrgestells 19 jederzeit möglich.

ANSPROCHE:

1. Straßenfahrzeug mit Elektroantrieb auf der Grundlage eines Zweirades mit einem Rahmen, einer elektrischen Energiequelle und einem elektrischen, auf mindestens ein Rad einwirkenden Antriebsmotor, dadurch gekennzeichnet, daß die Energiequelle (20) und der Antriebsmotor (21) an einem zusätzlichen Fahrgestell (19) angeordnet sind, welches auf einer Seite mit dem Rahmen (2) des Zweirades (1) über ein Pendelgelenk (13) verbunden ist, dessen Gelenkachse (14) parallel zur Längsachse des Rahmens verläuft, und welches auf der anderen, dem Rahmen (2) abgekehrten Seite mit einem weiteren Rad (25) versehen ist, auf das der Antriebsmotor (21) einwirkt.

2. Straßenfahrzeug nach Anspruch 1, dadurch gekennzeichnet, daß das Pendelgelenk (13) an einem etwa U-förmigen Bügel (7) angeordnet ist, der zur Aufnahme des Hinterrades (5) des Zweirades (1) ausgebildet ist, und dessen Schenkel (8) mit Befestigungsmitteln (9, 10) zur Anbringung an der unteren Hinterradgabel (32) des Zweirades versehen ist.

3. Straßenfahrzeug nach Anspruch 2, dadurch gekennzeichnet, daß der U-förmige Bügel (7) mit Laschen (11) zum Aufstecken auf die Enden der Hinterachse (4) des Zweirades (1) versehen ist und daß die Schenkel (8) über die Laschen hinaus verlängert sind und an ihren Enden Schellen (12) zum Verbinden mit der unteren Hinterradgabel (32) aufweisen.

4. Straßenfahrzeug nach Anspruch 2, dadurch gekennzeichnet, daß das Pendelgelenk (13) eine Gelenkhülse (15) besitzt, die parallel zum einen Schenkel (8) des Bügels (7) verläuft und unmittelbar an diesem befestigt ist.

5. Straßenfahrzeug nach den Ansprüchen 1 und 4, dadurch gekennzeichnet, daß das Pendelgelenk (13) etwa in Höhe der Hinterachse (4) des Zweirades (1) verläuft.

6. Straßenfahrzeug nach den Ansprüchen 1 und 2, dadurch gekennzeichnet, daß das zusätzliche Fahrgestell (19) als in montiertem Zustand etwa waagrechter Rahmen mit Längsholmen (18b, 18c, 18d) ausgebildet ist, von denen der eine Längsholm (18b) Ösen (16) besitzt, zwischen die die Gelenkhülse (15) des Bügels (7) koaxial einsetzbar ist, und von denen zwei weitere Längsholme (18c, 18d) mit Lagerböcken (23) für die Achse (24) des weiteren Rades (25) versehen sind und dieses Rad zwischen sich aufnehmen.

7. Straßenfahrzeug nach Anspruch 6, dadurch gekennzeichnet, daß der Rahmen (18) in einer Ebene quer zur vorgegebenen Fahrtrichtung etwa L-förmig mit nach oben gerichtetem kurzen Schenkel (18e) ausgebildet ist, und daß das Pendelgelenk (13) etwa am oberen Ende des kurzen Schenkels angeordnet ist.

8. Straßenfahrzeug nach Anspruch 1, dadurch gekennzeichnet, daß die Hinterachse (4) des Zweirades (1) und die Achse (24) des weiteren Rades (25) im wesentlichen in einer gemeinsamen senkrechten Ebene liegen, die durch den gemeinsamen Schwerpunkt von Energiequelle (20) und Antriebsmotor (21) verläuft.

9. Straßenfahrzeug nach Anspruch 1, dadurch gekennzeichnet, daß der Antriebsmotor (21) ständig mit den angetriebenen Rad (25) in Verbindung steht und daß in der Stromversorgung des Antriebsmotors ein Leistungssteller (30) angeordnet ist.

10. Straßenfahrzeug nach Anspruch 9, dadurch gekennzeichnet, daß der Leistungssteller über einen Hand-Drehgriff (29) betätigbar ist.

11. Straßenfahrzeug nach Anspruch 9, dadurch gekennzeichnet, daß die Schaltung des Motorantriebs so ausgelegt ist, daß die Energiequelle beim Bremsen geladen wird.

12. Straßenfahrzeug nach Anspruch 1, dadurch gekennzeichnet, daß das Rad (25) des Fahrgestells (19) mit einer Feststellbremse ausgestattet ist.

13. Straßenfahrzeug nach Anspruch 1, dadurch gekennzeichnet, daß am Fahrgestell (19) Stützen (33) für dessen Aufstellung im vom Zweirad (1) getrennten Zustand angebracht sind.

14. Antriebsaggregat für die Umrüstung eines Zweirades, insbesondere eines Fahrrades, in ein Straßenfahrzeug mit Elektroantrieb, bestehend aus einer elektrischen Energiequelle und aus einem elektrischen Antriebsmotor, gekennzeichnet durch ein mit dem Antriebsmotor (21) und mit Halterungen für die mindestens eine Energiequelle (20) ausgerüstetes Fahrgestell (19), welches auf einer Seite mit dem Rahmen (18) des Zweirades (1) über ein Pendelgelenk (13) verbindbar ist, dessen Gelenkachse (14) in der vorgegebenen Fahrtrichtung verläuft und welches auf der dem Pendelgelenk (13) abgekehrten Seite mit einem Rad (25) versehen ist, das von dem Antriebsmotor (21) antreibbar ist.

FIG.1

FIG.2

2/4

0065280

FIG. 3

0065280

FIG. 4

Europäisches
Patentamt

**EUROPÄISCHER RECHERCHENBERICHT**

0065280

Nummer der Anmeldung

EP 82 10 4173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| E | WO-A-8 101 989 (SPRICK)<br>* Figuren 8,9; Seite 12, Zeile 6 - Seite 15, Zeile 5 *<br><br>--- | 1-8,14 | B 62 M 7/14 |
| A | DE-A-2 724 650 (HAGE)<br>* Skizze 1,2; Seite 4, (Beschreibung von Ausführungsbeispielen) *<br><br>--- | 1-8,14 | |
| A | GB-A- 197 701 (BULLO-FAHRZEUGBAU)<br>* Seite 1, Zeilen 63-67 *<br><br>--- | 9,10 | |
| A | DE-A-2 124 274 (ZÜNDAPP-WERKE)<br><br>--- | | |
| A | DE-A-2 532 181 (WINKLER)<br><br>--- | | RECHERCHIERTE SACHGEBIETE (Int. Cl. 3) |
| A | CH-A- 98 009 (GUERNE)<br><br>----- | | B 62 M<br>B 62 K |

Der vorliegende Recherchenbericht wurde für alle Patentansprüche erstellt.

| Recherchenort<br>DEN HAAG | Abschlußdatum der Recherche<br>10-08-1982 | Prüfer<br>GEMMELL R.I.D. |
|---|---|---|